# EUROPEAN PATENT APPLICATION

(11) **EP 4 566 977 A1**
(43) Date of publication of application: **11.06.2025**
(21) Application number: 24306918.4
(22) Date of filing: 15.11.2024
(51) Int. Cl.: B65H 75/22, B65H 55/04, B65H 75/24, B65H 75/14, B65H 75/26

(54) **METHOD FOR WINDING A CABLE ONTO A CABLE REEL AND CORRESPONDING CABLE REEL**

(30) Priority: 07.12.2023 NO 20231323
(71) Applicant: Nexans, 92400 Courbevoie (FR)
(72) Inventor: DOEDENS, Espen, 92400 COURBEVOIE (FR); LESUR, Frederic, 92400 COURBEVOIE (FR); GALERON, Didier, 92400 COURBEVOIE (FR)
(74) Representative: Onsagers AS

(57) **Abstract**

A method for winding a cable (12) onto a cable reel (22) is proposed, the method comprising the steps of providing a cable reel (22) having a drum (24) arranged between two end flanges (28, 30), the drum (24) having a longitudinal axis (26), and placing the cable (12) on the drum (24) to form a plurality of continuous helical windings (32) on the drum (24), wherein consecutive windings (32) are directly adjacent to each other, wherein main bending axes (34) of the continuous helical windings (32) and the longitudinal axis (26) of the drum (24) enclose an offset angle (α) greater than zero.

## Description

### Field of the invention

The present invention relates to a method for winding a cable onto a cable reel, a cable reel, and a system for winding a cable onto a cable reel.

### Background

For transporting large high voltage cables, the cables are usually wound on a cable reel and are placed on a suitable transportation means. When winding the cable up, a minimum bending radius needs to be respected, which depends on the diameter of the cable profile, and the exact structure. For land transport, it is common to use wide cable reels with a longitudinal axis, which also forms a helix axis for the cable, being arranged parallel to a transporting direction. These cable reels may reach a weight of up to 100 tons and more. Depending on the type of the cable, the bending diameter may e.g. exceed 2.5 m, which makes a cable reel for transporting the cable too large for a railroad transport, as well as for viaduct lorry crossings.

An object of the invention is to propose an alternative method for winding a cable onto a cable reel or the like, that allows to reduce a dimension of the cable reel.

### Summary of the invention

The present invention is defined by the appended claims and in the following:
In a first aspect, the invention relates to a method for winding a cable onto a cable reel, the method comprising the steps of providing a cable reel having a drum arranged between two end flanges, the drum having a longitudinal axis, and placing the cable on the drum to form a plurality of continuous helical windings on the drum, wherein main bending axes of the continuous helical windings and the longitudinal axis of the drum enclose an offset angle greater than zero.

The method provides a flattened cable reel with a cable wound around the drum of the cable reel while maintaining an imminent minimum bending diameter. The minimum bending radius is to be understood as the smallest radius around which the cable can be bent without being damaged. The minimum bending radius depends on the size and structure of the respective cable, for example on the type of conductor, the insulation material, the design of semiconducting layers, shields, and an outer sheath. It is often defined as the product of an outer diameter of the cable and a type-specific multiplier. By providing helical windings with local bending radii that correspond to or exceed the minimum bending radius, the requirement of respecting the minimum bending radius is met. In the following, the term "bending diameter" is sometimes used for the sake of convenience. The bending diameter corresponds to the double bending radius.

The end flanges of the cable reel may be considered end stops that prevent the cable from slipping off the drum. The outer diameter of the end flanges may be selected according to the number of winding layers to be formed on the drum. Preferably, the end flanges do not protrude over the outermost cable layer in a radial direction to limit the size of the cable reel.

The drum is a part of the cable reel on which the cable will be arranged. Preferably, it has a constant cross-sectional profile along the longitudinal axis. The length of the drum may be chosen under consideration of the cable length to be placed on the cable reel.

Preferably, consecutive windings are directly adjacent to each other. When forming helical windings on the drum, each winding has a local helix axis, around which the cable is bent. The helix axis of each winding may be considered the main bending axis of the respective winding. The term "main bending axis" may be understood as a mean or average bending axis for a particular winding. According to the invention, the bending axis or helix axis of each winding is at an oblique angle to the longitudinal axis. The main bending axes of substantially all windings may intersect with the longitudinal axis of the cable reel. If each winding is approximated as a kind of a circular disc, the entirety of the windings results as a series of oblique circular discs staggered along the longitudinal axis, wherein the center points of all circular discs are intersected by the longitudinal axis.

Consequently, the cable windings do not form a cylindrical helix, as the individual windings are skewed about a skewing axis that is perpendicular to the longitudinal axis. Resultantly, the cable drum does not need to have a circle-cylindrical shape during the transport of the cable. Instead of being circular, the cross-section of the drum could be oval. One dimension of the cross-section of the cable drum may significantly be reduced to be below a required minimum bending diameter of the cable. This means, that the cable reel may be flattened. However, due to the advantageous winding method, the minimum bending radius of the cable is met by all windings. The flattened cable reel may thus be inserted into a transportation means that would otherwise not have sufficient space for receiving a cable reel with a circle-cylindrical drum and windings that form a cylindrical helix.

Preferably, the windings are arranged tightly on the drum. They may connect flush with each other, i.e. they may be directly adjacent to each other. While it is preferred that all windings form continuous helical windings, some of them may form a cross-over, or a transition between individual layers of windings. Also, first and last windings may have a cable end that does not completely follow the path of the remaining part of the cable.

The main bending axes of the windings and the longitudinal axis may enclose an offset angle in the range of 2 to 70°. The offset angle may be in a range of 2-10°, 10-30° or 30-70°. The offset angle may result from the dimensions of a transportation means and from the minimum bending radius of the cable and may differ from cable to cable.

The windings may be formed to create an oval projection on a reference plane perpendicular to the longitudinal axis. Due to the offset angle, the windings are skewed relative to the reference plane. They may, however, still follow a generally circular path on a plane that is perpendicular to the main bending axis associated with the respective winding. Such a circular path can be perceived as an oval or an ellipsis in the reference plane.

The drum may comprise a plurality of elongated support elements that are distributed around the longitudinal axis, wherein each elongated support element may extend parallelly to the longitudinal axis from one of the end flanges to the other one of the end flanges in a distance to the longitudinal axis, wherein each elongated support element may be hingedly coupled with both end flanges such that the cable reel can be skewed around a skewing axis perpendicular to the longitudinal axis, and wherein the step of placing the cable may comprise winding the cable onto the drum in a winding state of the cable reel, in which the end flanges are arranged perpendicular to the longitudinal axis, and skewing the cable reel around the skewing axis to slant the end flanges and move the support elements to form the offset angle in a transportation state of the cable reel. Hence, the cable reel can assume two different operating states. The first operating state is referred to as a winding state, in which the cable can be wound onto or unwound from the drum. The second operating state is referred to as a transportation state, in which the cable reel is ready for being transported. Switching from the winding state into the transportation state is done by skewing the cable reel around the skewing axis. When skewing the cable reel, the support elements are parallelly displaced or shifted, maintaining the parallel orientation of the end flanges relative to each other. In the winding state, when the flanges are perpendicular to the longitudinal axis, all support elements have the same distance to the longitudinal axis of the cable reel.

Consequently, they may define a generally circle-cylindrical drum in the winding state. In this state, the cable may be wound onto the drum by rotating the cable reel around its longitudinal axis and guiding the cable similar to a common winding process. After winding the cable onto the drum, the cable reel may be skewed to reach the transportation state. In doing so, the support elements are moved and assume positions, in which they define a substantially elliptical cylinder as the drum when viewed along the longitudinal axis. A profile of the drum extending along the longitudinal axis is therefore flattened in one direction. The windings that are already arranged on the drum may follow this motion and thus reach a state where their main bending axes and the longitudinal axis enclose the offset angle. The elongated support elements may be arranged in a distance to each other at least in the winding state, thereby allowing to move relative to each other when skewing the cable reel.

The support elements may be provided in the form of beams, rods, plates or other mechanical elements. The shape of a support element is not crucial for its function as long as a contact surface is large enough to locally support the cable.

Hinges for coupling the support elements and the end flanges may have a single degree of freedom, i.e. they may be able to rotate about a single hinge axis. Then, the hinges need to be aligned, such that their hinge axes are parallel to each other. However, also hinges or joints with more than one degree of freedom may be used, e.g. hinges that are capable to rotate about two or three rotational axes. A precise alignment of all hinges may not be required.

The skewing angle may correspond to the offset angle. This means that the end flanges and the reference plane mentioned above may enclose an angle that corresponds to the offset angle, i.e. that is substantially identical to it.

The method may comprise the step of locking the end flanges and the elongated support elements relative to each other in the transportation state. When the shape of the cable reel is locked, the cable reel can be handled more easily, as an inadvertent switch into the winding state can be prevented. A locking function may be provided by the hinges. The hinges may be self-locking, or they may be manually lockable. For example, the hinges may be configured to self-lock when the cable reel reaches the transportation state. The flanges may have openings on their sides facing away from the drum, through which openings the hinges can be accessed for unlocking from outside the cable reel.

The method may comprise the steps of moving the cable reel being in the transportation state onto a transportation means, removing the cable reel from the transportation means after a transport with the transportation means, and unskewing the cable reel to reach the winding state before unwinding the cable from the cable reel again. By skewing the cable reel, the reel is flattened, such that it may fit into a receiving space of the transportation means that is narrower than the sum of bending diameter of the cable and twice the cable diameter. If the cable reel is configured to be lockable at least in the transportation state, it may be unlocked prior to unskewing. The method may comprise the step of transporting the cable reel with the cable wound onto the cable reel in above-described manner.

The end flanges may be fixedly attached to the drum, wherein the step of placing the cable may comprise rotating the cable reel about a rotational axis and guiding the cable onto the drum. The rotational axis and the longitudinal axis may not be parallel to each other. The cable reel may be rotated in a way to guide the cable substantially perpendicularly to the rotational axis onto the drum. This simplifies the winding and unwinding process, as the cable does not need to be significantly bent from a cable feed direction into a desired orientation of the windings on the drum. Fixedly attaching the end flanges to the drum is to be understood as the end flanges permanently being oblique to a reference plane perpendicular to the longitudinal axis. The angle enclosed between the end flanges and the reference plane may be the offset angle.

The rotational axis may be parallel to a main bending axis of at least one of the continuous helical windings. The cable may then be smoothly fed onto the drum perpendicularly to the main bending axis and substantially from a path that forms an extension of a winding about to be formed. Preferably, the rotational axis may be collinear with a main bending axis of a center winding, i.e. a winding in the center of the drum.

In a second aspect, the invention relates to a cable reel, comprising two parallel end flanges, and a drum arranged between the end flanges, wherein the cable reel has a longitudinal axis, and wherein the end flanges and a reference plane perpendicular to the longitudinal axis enclose an offset angle greater than zero at least in a transportation state of the cable reel. Thus, the cable reel is configured for placing a cable on the drum to form a plurality of continuous helical windings on the drum, wherein consecutive windings are directly adjacent to each other, wherein main bending axes of the continuous helical windings and the longitudinal axis of the drum enclose the offset angle. The windings may follow generally circular paths on a plane perpendicular to the main bending axes, as explained above. The drum may thus have an oval cross-sectional profile when viewed along the longitudinal axis.

The end flanges and the drum may be configured to permanently maintain the offset angle enclosed by the end flanges and the reference plane This may be done, for example, by fixedly attaching the end flanges under the offset angle to the drum.

In an embodiment, the drum may comprise a plurality of elongated support elements that are distributed around the longitudinal axis, wherein each elongated support element may extend parallelly to the longitudinal axis from one of the end flanges to the other one of the end flanges in a distance to the longitudinal axis, and wherein each elongated support element may be hingedly coupled with both end flanges, such that the cable reel is skewable about a skewing axis perpendicular to the longitudinal axis to be brought into the transportation state or into a winding state, wherein in the winding state the end flanges and the reference plane are parallel. As explained further above, the winding state allows to wind the cable onto the cable reel similarly to common winding methods. After skewing the cable reel into the transportation state, the windings will assume the offset angle.

The support elements may be connected to the end flanges by hinges, wherein at least some of the hinges are lockable in the transportation state. This allows to lock the shape of the cable reel in the transportation state, as explained above.

A projection of the drum onto the reference plane may follow an oval shape in the transportation state.

The drum may have radial grooves to receive the cable. The cable is held in the grooves to support the winding and transport of the cable on the cable reel. In particular with the embodiment having the elongated support elements, the movement of the windings to form the offset angle is supported.

In a third aspect, the invention relates to a system for winding a cable onto a cable reel, comprising a cable reel according to the above, a rotation device to hold and rotate the cable reel about a rotational axis, and a cable feed apparatus for feeding the cable onto the cable reel, wherein the system is configured to conduct the method according to the above.

### Short description of the drawings

In the following description this invention will be further explained by way of exemplary embodiments shown in the drawings:
Fig. 1a shows a cable reel and a cable wound onto the cable reel in a lateral view according to the prior art.
Fig. 1b shows the cable reel and the cable wound onto the cable reel in a front view according to the prior art.
Fig. 2a shows a first exemplary embodiment of a cable reel and a cable wound onto the cable reel in a lateral view.
Fig. 2b shows the first exemplary embodiment of the cable reel and a cable wound onto the cable reel in a front view.
Fig. 3a shows a second exemplary embodiment of a cable reel and a cable wound onto the cable reel in a lateral view and a front view in a winding state.
Fig. 3b shows the second exemplary embodiment of a cable reel and a cable wound onto the cable reel in a lateral view and a front view in a transportation state.
Fig. 4a schematically shows a system for winding a cable onto the cable reel shown in Figs. 2 a and 2b.
Fig. 4b schematically shows a system for winding a cable onto the cable reel shown in Figs. 3a and 3b.
Fig. 4c schematically shows skewing the cable reel shown in Figs. 3a, 3b and 4b.
Fig. 4d schematically shows a transportation means in which cable reels are arranged.

### Detailed description of the invention

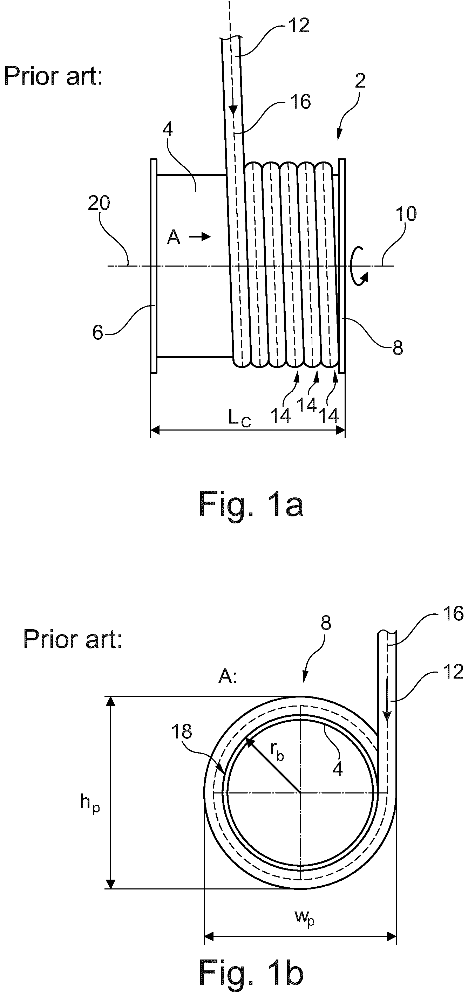

Fig. 1a shows a common cable reel 2 according to the prior art. The cable reel 2 has a drum 4 arranged between two end flanges 6 and 8. The drum 4 has a longitudinal axis 10, around which the drum 4 can be rotated. The drum 4 has a substantially circle-cylindrical shape. The end flanges 6 and 8 are arranged to be perpendicular to the longitudinal axis 10.

A high voltage cable 12 is wound onto the cable reel 2. For achieving this, the cable reel 2 is rotated around the longitudinal axis 10, while the cable 12 is guided onto an outer surface 18 of the drum 4. The outer surface 18 of the drum 4 come into contact with the high voltage cable 12. Resultantly, a plurality of continuous helical windings 14 are formed on the drum 4, which are flush with each other.

The high voltage cable 12 has an imminent minimum bending radius to avoid damages to it. When providing the windings 14, the minimum bending radius must be met. The size of the drum 4 is dimensioned accordingly and the diameter of the drum preferably exceeds the minimum bending diameter by a few %, for example by 1 to 5%.

A center line 16 of the high voltage cable 12 creates circular paths on a plane perpendicular to the longitudinal axis 10 of the drum 4, as illustrated in Fig. 1b. An outer diameter of the drum 4 is substantially identical to the bending radius r_{b} of the cable 12. Given the minimum bending radius of the cable 12, the outer diameter of the drum 4 cannot be smaller than the minimum bending diameter of the cable 12.

As indicated in Fig. 1a, all windings 14 are bent around the same main bending axis 20, which is equal to the longitudinal axis 10. In the prior art, the cable 12 is formed as a cylindrical helix on the drum 4. The height hₚ and width wₚ of the cable reel 2 in a plane perpendicular to the longitudinal axis 10 at least correspond to the sum of the minimum bending diameter and the double diameter d_{c} of the cable 12 if the cable 12 is wound up in a single layer. If the cable 12 is wound up in a plurality of layers, or if the end flanges 6 and 8 have a larger diameter than all layers of the cable 12, this would determine the total height and width of the cable reel 2 in a plane perpendicular to the longitudinal axis 10.

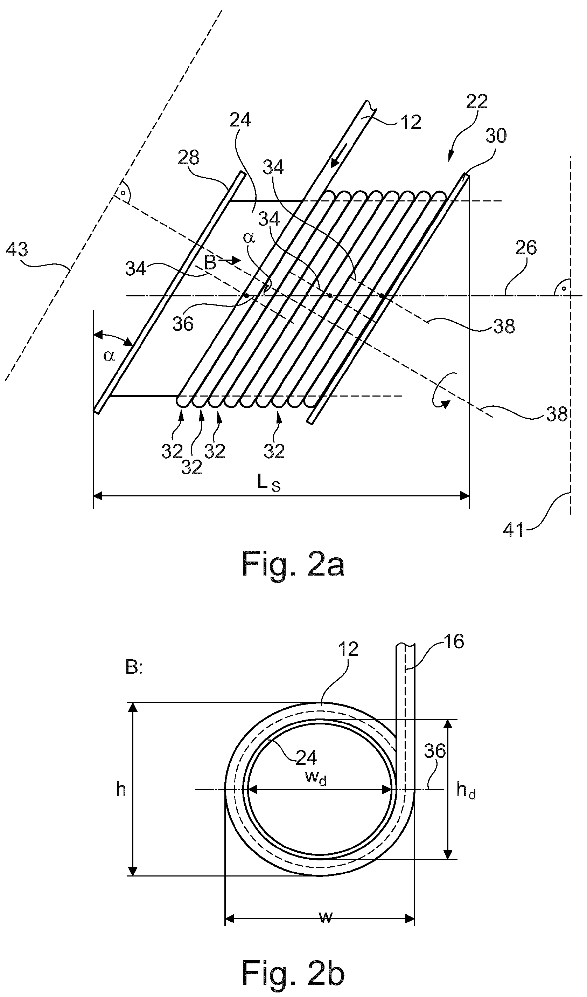

Figs. 2a and 2b show a first embodiment of a cable reel 22 according to the invention. Here, a drum 24 is arranged between two end flanges 28 and 30 and extends along a longitudinal axis 26. The drum 24 has an oval cross-sectional profile in a plane perpendicular to the longitudinal axis 26. As illustrated in Fig. 2b, the cross-sectional profile of the drum 24 has a height h_{d} that is smaller than a width wa of the drum 24.

The shape of the drum 24 supports an advantageous method for winding the cable 12 onto the cable reel 22. By conducting the method according to the invention, the cable 12 is placed on the drum 24 to form a plurality of continuous helical windings 32 on the drum 24, wherein consecutive windings are directly adjacent to each other. Different to the prior art illustration in Figs. 1a and 1b, main bending axes 34 of the windings 32 and the longitudinal axis 26 of the drum 24 enclose an offset angle α that is greater than zero.

This means, that the cable 12 is not curved or bent around the longitudinal axis 26, but around a plurality of local bending axes 34 that are oblique to the longitudinal axis 26. By running around the circumference of the drum 24 once and thereby moving about one cable diameter along the longitudinal axis 26, the cable 12 forms one helical winding 32 on the drum 24. Several helical windings 32 are created one after another, until one layer of helical windings 32 is created between the end flanges 28 and 30.

Each helical winding 32 has a local helix axis 34, which is a main bending axis 34 for the cable in the respective winding. The individual main bending axes 34 of all windings 32 are parallel to each other, preferably intersect the longitudinal axis 26 and enclose the offset angle α with the longitudinal axis 26.

Compared with the prior art illustrated in Figs. 1a and 1b, each winding 32 is skewed around a skewing axis 36, which is orthogonal to the longitudinal axis 26. The dimensional extension of each winding 32 in a direction orthogonal to the longitudinal axis 26 and orthogonal to the skewing axis 36 is reduced. The projection of a winding 32 onto a reference plane 41 perpendicular to the longitudinal axis 26 has an oval shape. The projection of a winding 32 onto an oblique plane 43 perpendicular to the respective bending axis 34 has, however, a circular shape with a radius corresponding to the minimum bending radius.

Consequently, the cable 12 may be wound onto the cable reel 22 under maintaining the minimum bending radius, but allowing a reduction of size of the cross-sectional profile of the drum 24 in one direction. Due to skewing each winding 32, the end flanges 28 and 30 may be arranged perpendicular to the bending axes 34. The length of the cable reel 22, which is referred to as lₛ, is increased in comparison to the length l_{c} of the cable reel 2 to according to the prior art.

When the minimum bending diameter of the cable 12 is, for example, in the range of 2.5 to 3 m, one dimension of the cable reel 22 may be reduced to less than 2.5 m due to its flattened shape. This allows to place the cable reel 22 into a railway carriage of a common size that is dimensioned to receive an ISO standard container having a width of 2438 mm and a height of 2591 mm (or 2896 mm for high-cube containers).

For supporting the advantageous winding method, the cable reel 22 may be rotated about a rotational axis 38 that is oblique to the longitudinal axis 26 during winding and unwinding of the cable 12. It is advantageous to use a rotational axis 38 that is parallel to all bending axes 34. For example, the rotational axis 38 may be perpendicular to the end flanges 28 and 30 and intersects with a center 40 of the drum 24. It may be collinear with the bending axis 34 of a center winding 32.

By rotating the cable reel 22 in this manner, the cable 12 can be guided substantially perpendicularly to the rotational axis 38 when winding and unwinding. The required space for rotating the cable reel 22 is increased in comparison with the space required for rotating the cable reel to according to the prior art, as the cable reel 22 will conduct a wobbling motion.

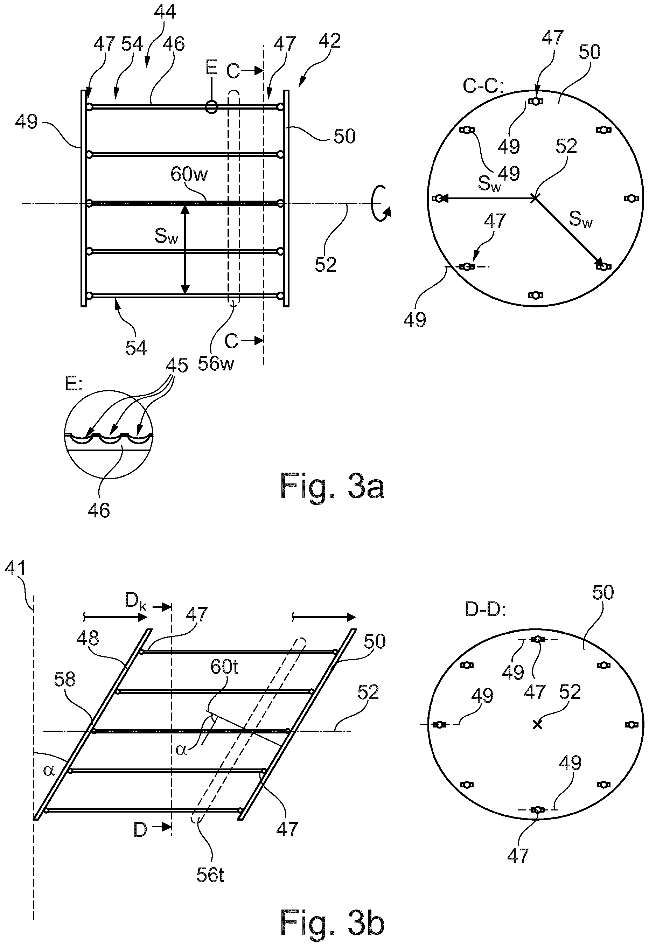

In Figs. 3a and 3b, a further embodiment in form of a cable reel 42 is shown. The cable reel 42 has a drum 44, which comprises a plurality of elongated support elements 46. In this exemplary embodiment, the support elements 46 are shown as beams. Other variants are not ruled out and may also include rods or plates. The support elements 46 extend from one end flange 48 to an opposed end flange 50 in a distance to the longitudinal axis 52. They are distributed around a longitudinal axis 52 in a distance and parallel to each other. The distance between the longitudinal axis 52 and the support elements 46 is the same for each support element 46 in the state shown in Fig. 3a.

The support elements 46 are connected to each flange 48 and 50 by a hinge 47. The hinge 47 may have a single rotational degree of freedom around a hinge axis 49 each. All hinge axes 49 may be arranged parallel to each other.

In the exemplary illustration, eight support elements 46 are used. It is conceivable to use any suitable number of support elements 46 depending on the size of the cable reel 42 and the properties of the cable 12. The size and profile of the support elements 46 is adapted to bear the mechanical load from the cable 12 wound up on the drum 44.

In Fig. 3a, the cable reel 42 is shown in a "winding state". In this state, the end flanges 48 and 50 are arranged perpendicular to the longitudinal axis 52. Consequently, all support elements 46 are perpendicular to both end flanges 48 and 50 and the drum 44 has an approximated circular-cylindrical shape. A radial outer surface 54 of all support elements 46 has a distance s_{w} to the longitudinal axis 52 that substantially corresponds to the minimum bending radius or exceeds it by exemplary 1 to 5 %.

In the winding state, the cable 12 can be wound onto the drum 44 in a similar way as commonly done and shown in Fig. 1a. The cable reel 42 is rotated around the longitudinal axis 52 and the cable 12 is guided onto the drum 44. As a result of the winding process, the cable 12 forms a cylindrical helix on the drum 44. Thus, a plurality of windings 56w are created, which are bent around a single main bending axis 60w. In the winding state, the bending axis 60w and the longitudinal axis 52 may be collinear. The index "w" of the reference numerals 56 and 60 express that these correspond to the windings and the bending axis in the winding state. To support the cable 12 in their position on the drum 44, the support elements 36 exemplarily have radial grooves 45, in which a part of the cable 12 may rest.

Fig. 3b shows that after the winding, the cable reel 42 can be skewed around a skewing axis 58, which is perpendicular to the longitudinal axis 52, about the offset angle α to reach the transportation state. The skewing axis 58 is preferably parallel to the hinge axes 49 and vice-versa. When skewing, both end flanges 48 and 50 are slanted or tilted, such that they end up in an orientation that is not perpendicular to the longitudinal axis 52. Exemplarily, they enclose the offset angle α with the reference plane 41.

The windings 56w follow this motion to form skewed windings 56t. This may be further supported by the grooves 45. The main bending axis 60w changes to a plurality of main bending axes 60t. The windings 56t and the bending axes 60t may correspond to the windings 32 and the bending axes 34 shown in Fig. 2a. The index "t" of the reference numerals 56 and 60 express that these correspond to the windings and the bending axis in the transportation state.

By skewing the cable reel 42, the majority of the support elements 46 move parallel to the longitudinal axis 52, depending on where exactly the skewing axis 58 is placed. The support elements 46 may also decrease their distance to the longitudinal axis 52 depending on the position and orientation of the skewing axis 58.

Resultantly, the cable reel 42 in the transportation state has substantially the same shape and appearance as the cable reel 22 shown in Fig. 2a.

The cable reel 42 with the cable 12 wound on, may be placed in a transportation means, such as a railway carriage. After the transport, the cable reel 42 may be taken out of the transportation means to be unskewed and unwound again. The hinges 47 may be configured to be lockable to lock at least in the transportation state.

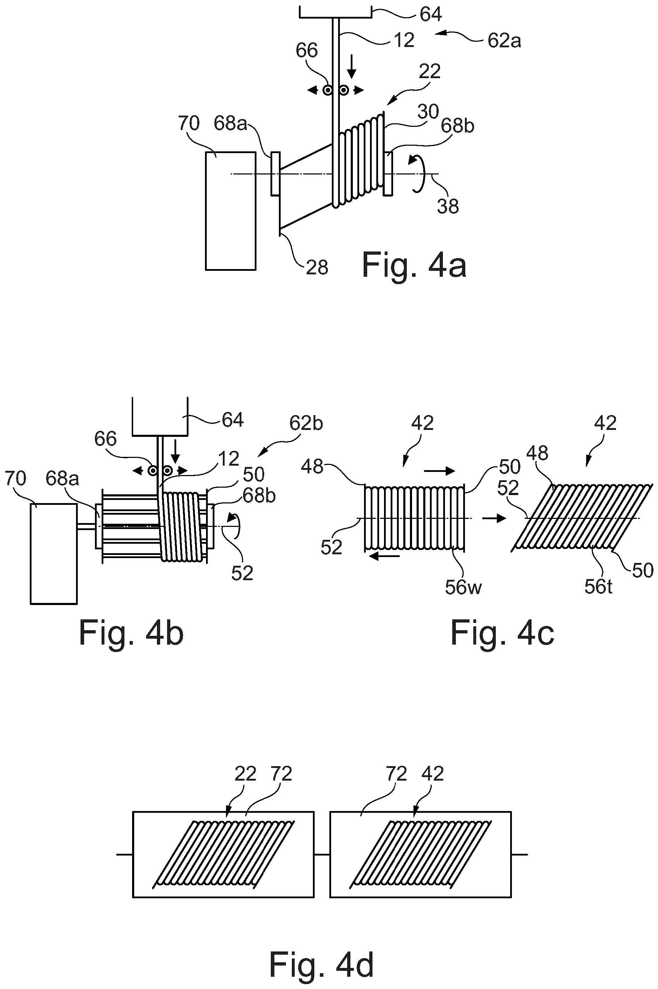

Fig. 4a schematically shows a system 62a for winding a cable 12 onto the cable reel 22 of Figs. 2 a and 2b. The cable reel 22 is coupled with two rotational bearings 68a and 68b, arranged at the end flanges 28 and 30. The cable reel 22 is rotated about the rotational axis 38, which is substantially perpendicular to the end flanges 28 and 30, as illustrated in Fig. 2a. Since the rotational axis 38 is oblique to the longitudinal axis 26 of the cable reel 22, the cable reel 22 conducts a wobbling motion during rotation.

The cable reel 22 is driven by a rotation device 70, which may comprise an electric motor and, if desired or required, a gear. The cable 12 is fed by a cable feed apparatus 64 and is guided onto the drum 24 through a cable guide device 66. The cable guide device 66, for example, is configured to move along the longitudinal axis of 38 to consecutively guide one winding onto the drum 24 after the other.

In Fig. 4b, a system 62b for winding a cable 12 onto the cable reel 42 of Figs. 3a and 3b is shown. Here, the cable reel 42 is coupled with the two bearings 68a and 68b and is rotated by the rotation device 70. The cable reel 42 is rotated in its winding state around the longitudinal axis 52, while the end flanges 48 and 50 are perpendicular to the longitudinal axis 52. Again, the cable 12 is fed by the cable feed apparatus 64 and is guided by the cable guide device 66.

After winding the cable 12 on the cable reel 42, the cable reel 42 is skewed as shown in figure 4c.

Fig. 4d schematically shows a transportation means 72 in the form of a railroad carriage, in which a cable reel 22 or 42 is arranged. Due to its flattened shape, the cable reel 22 or 42 fits into the carriage 72, even though the carriage 72 has a width that would not be sufficient to receive a reel 2 with a cable 12 having the same minimum bending diameter.

### Reference numerals

2 cable reel (prior art)
4 drum (prior art)
6 flange (prior art)
8 flange (prior art)
10 longitudinal axis (prior art)
12 high voltage cable
14 winding (prior art)
16 center line (prior art)
18 outer surface (prior art)
20 main bending axis (prior art)
22 cable reel
24 drum
26 longitudinal axis
28 flange
30 flange?
32 winding
34 bending axis
36 skewing axis
38 rotational axis
40 center
41 reference plane
42 cable reel
43 oblique plane
44 drum
45 groove
46 support element
47 hinge
48 flange
49 hinge axis
50 flange
52 longitudinal axis
54 radial outer surface
56 (t, w) winding
58 skewing axis
60 (t, w) bending axis
62 (a, b) system for winding
64 cable feed apparatus
66 cable guide device
68 (a, b) bearing
70 rotation device
α offset angle

## Claims

1. A method for winding a cable (12) onto a cable reel (22, 42), the method comprising the steps of:
providing a cable reel (22, 42) having a drum (24, 44) arranged between two end flanges (28, 30, 48, 50), the drum (24, 44) having a longitudinal axis (26, 52), and
placing the cable (12) on the drum (24, 44) to form a plurality of continuous helical windings (32, 56) on the drum (24, 44),
wherein main bending axes (34, 60t) of the continuous helical windings (32, 56) and the longitudinal axis (26, 52) of the drum (24, 44) enclose an offset angle (α) greater than zero.

2. The method according to claim 1,
wherein the main bending axes (34, 60t) of the windings (32, 56t) and the longitudinal axis (26, 52) enclose an offset angle (α) in the range of 20° to 60°.

3. The method according to claim 1 or 2,
wherein the windings (32, 56) are formed to create an oval projection on a reference plane (41) perpendicular to the longitudinal axis (26, 52).

4. The method according to any of the preceding claims,
wherein the drum (44) comprises a plurality of elongated support elements (46) that are distributed around the longitudinal axis (52),
wherein each elongated support element (46) extends parallelly to the longitudinal axis (52) from one of the end flanges (48, 50) to the other one of the end flanges (48, 50) in a distance to the longitudinal axis (52),
wherein each elongated support element (46) is hingedly coupled with both end flanges (48, 50), such that the cable reel (42) can be skewed around a skewing axis (58) perpendicular to the longitudinal axis (52), and
wherein the step of placing the cable (12) comprises winding the cable (12) onto the drum (44) in a winding state of the cable reel (42), in which the end flanges (48, 50) are arranged perpendicular to the longitudinal axis (52), and skewing the cable reel (42) around the skewing axis (58) to slant the end flanges (48, 50) and move the support elements (46) to form the offset angle (α) in a transportation state of the cable reel (42).

5. The method according to claim 4,
comprising the step of locking the end flanges (48, 50) and the elongated support elements (46) relative to each other in the transportation state.

6. The method according to claim 4 or 5, comprising the steps of:
moving the cable reel (42) being in the transportation state onto a transportation means,
removing the cable reel (42) from the transportation means after a transport with the transportation means, and
unskewing the cable reel (42) to reach the winding state before unwinding the cable (12) from the cable reel (42) again.

7. The method according to any one of claims 1 to 3,
wherein the end flanges (28, 30) are fixedly attached to the drum (24),
wherein the step of placing the cable (12) comprises rotating the cable reel (22) about a rotational axis (38) and guiding the cable (12) onto the drum (24), and
wherein the rotational axis (38) and the longitudinal axis (26) are not parallel to each other.

8. The method according to claim 7,
wherein the rotational axis (38) is parallel to a main bending axis (34) of at least one of the continuous helical windings (32).

9. A cable reel (22, 42), comprising:
two parallel end flanges (28, 30, 48, 50), and
a drum (24, 44) arranged between the end flanges (28, 30, 48, 50),
wherein the cable reel (22, 42) has a longitudinal axis (26, 52), and
wherein the end flanges (28, 30, 48, 50) and a reference plane (41) perpendicular to the longitudinal axis (26, 52) enclose an offset angle (α) greater than zero at least in a transportation state of the cable reel (22, 42).

10. The cable reel (22, 42) according to claim 9,
wherein the end flanges (28, 30, 48, 50) and the drum (24, 44) are configured to permanently maintain the offset angle (α) enclosed by the end flanges (28, 30, 48, 50) and the reference plane.

11. The cable reel (42) according to claim 9,
wherein the drum (44) comprises a plurality of elongated support elements (46) that are distributed around the longitudinal axis (52),
wherein each elongated support element (46) extends parallelly to the longitudinal axis (52) from one of the end flanges (48) to the other one of the end flanges (50) in a distance to the longitudinal axis (52), and
wherein each elongated support element (46) is hingedly coupled with both end flanges (48, 50), such that the cable reel (42) is skewable about a skewing axis (58) perpendicular to the longitudinal axis (52) to be brought into the transportation state or into a winding state, wherein in the winding state the end flanges (48, 50) and the reference plane (41) are parallel.

12. The cable reel (42) according to claim 11,
wherein the support elements (46) are connected to the end flanges (48, 50) by hinges (47), wherein at least some of the hinges (47) are lockable in the transportation state.

13. The cable reel (22, 42) according to any of the claims 9 to 12,
wherein a projection of the drum (24, 44) onto the reference plane (41) follows an oval shape in the transportation state.

14. The cable reel (22, 42) according to any of the claims 9 to 13,
wherein the drum (24, 44) has radial grooves (45) to receive the cable (12).

15. A system (62) for winding a cable (12) onto a cable reel (22, 42),
comprising a cable reel (22, 42) according to any of the claims 9 to 14,
a rotation device (70) to hold and rotate the cable reel (22, 42) about a rotational axis (38, 52), and
a cable feed apparatus (64) for feeding the cable (12) onto the cable reel (22, 42),
wherein the system (62) is configured to conduct the method according to any of the claims 1 to 8.
